(19) Europäisches Patentamt

European Patent Office

Office européen des brevets

(11) **EP 1 141 077 B1**

(12) **FASCICULE DE BREVET EUROPEEN**

(45) Date de publication et mention
de la délivrance du brevet:
**17.07.2002   Bulletin 2002/29**

(21) Numéro de dépôt: **99973044.3**

(22) Date de dépôt: **26.11.1999**

(51) Int Cl.$^7$: **C08G 63/80**

(86) Numéro de dépôt international:
**PCT/FR99/02930**

(87) Numéro de publication internationale:
**WO 00/32676 (08.06.2000 Gazette 2000/23)**

(54) **PROCEDE DE FABRICATION DE POLYESTER**

VERFAHREN ZUR HERSTELLUNG VON POLYESTER

METHOD FOR MAKING POLYESTER

(84) Etats contractants désignés:
**AT BE CH CY DE DK ES FI FR GB GR IE IT LI LU
MC NL PT SE**

(30) Priorité:  **27.11.1998  FR 9815165**

(43) Date de publication de la demande:
**10.10.2001   Bulletin 2001/41**

(73) Titulaire: **Tergal Fibres
02430 Gauchy (FR)**

(72) Inventeurs:
• **GANTILLON, Barbara
  F-69690 Bessenay (FR)**
• **MC KENNA, Timothy
  F-69002 Lyon (FR)**
• **LEPAGE, Jean-Luc
  F-69340 Francheville (FR)**
• **PASQUET, Véronique
  F-69006 Lyon (FR)**
• **SPITZ, Roger
  F-69006 Lyon (FR)**

(74) Mandataire: **Esson, Jean-Pierre
  Rhodia Services,
  Direction de la Propriété Industrielle,
  Centre de Recherche Lyonnais,
  BP 62
  69192 Saint-Fons Cédex (FR)**

(56) Documents cités:
**EP-A- 0 807 655**

**Description**

La présente invention concerne la production d'un polymère de type polyester et plus particulièrement la condensation en phase solide d'un polyester.

La principale méthode d'obtention de polymères de type polyester consiste en une condensation à haute température soit du produit d'estérification d'un diacide carboxylique par un diol, soit du produit de transestérification d'un diester par un diol. Cette condensation est réalisée à l'état fondu. Pour l'obtention du poly(éthylène téréphtalate) (PET), on condense le produit de la transestérification du téréphtalate de méthyle (DMT) par l'éthylène glycol (EG) ou le produit de l'estérification de l'acide téréphtalique purifié (PTA) par l'éthylène glycol.

La condensation est menée jusqu'à obtention d'un composé de poids moléculaire désiré. Cette condensation ne peut pas conduire à des polymères ayant un indice de viscosité très élevé, notamment supérieur à 85 ml/g. Au delà d'une telle viscosité, le type de technologie actuellement employé ne permet pas de poursuivre la réaction. Si l'on désire obtenir des polymères à haut poids moléculaire, il est donc nécessaire d'effectuer une post-condensation à l'état solide à des températures de l'ordre de 200°C. Celle-ci consiste à chauffer une charge de granulés de polymère. Ce procédé en phase solide et à basse température permet notamment d'obtenir des polymères à faible niveau de dégradation.

La société Du Pont de Nemours, notamment dans les brevets US 5548868 et US 5510454, décrit une autre méthode d'obtention des polyesters. Cette méthode consiste à produire des pastilles de prépolymère, cristallisées de manière à les rendre suffisamment réactives, et ayant de très faibles degrés de polymérisation, compris entre 2 et 40. Les pastilles sont par la suite condensées à l'état solide selon le procédé décrit précédemment pour la post-condensation. Il est possible par cette méthode d'obtenir des polymères de tous poids moléculaires, avec des indices de viscosité inférieurs ou supérieurs à environ 85 ml/g, selon les conditions opératoires de la post-condensation.

Les procédés de condensation et de post-condensation en phase solide décrits ci-dessus sont de cinétique assez lente et constituent une étape limitante dans la fabrication des polyesters. Malgré les progrès accomplis, on cherche toujours à rendre l'étape de condensation ou de post-condensation en phase solide plus performante.

La présente invention a pour objectif de remédier aux problèmes posés par la condensation en phase solide en proposant un procédé qui permet d'augmenter la cinétique des condensations en phase solide. Elle propose une alternative aux procédés connus en mettant en oeuvre une condensation en phase solide dispersée dans un liquide. Celle-ci permet de s'affranchir des difficultés rencontrées avec le procédé usuel, d'augmenter des cinétiques de condensation et donc de parvenir plus rapidement aux degrés de polymérisation souhaités. La mise en oeuvre de la condensation en phase solide dispersée dans un milieu liquide doit être effectuée sur un prépolymère solide ayant des propriétés particulières, nécessaires à la bonne conduite du procédé et à l'accélération des cinétiques. L'invention a donc également pour objet un procédé d'obtention du prépolymère à condenser en phase solide dispersée, ainsi que ses caractéristiques, et en particulier les caractéristiques cristallines qui permettent de le rendre suffisamment réactif.

L'invention présente un procédé de fabrication de polyester qui comprend au moins les étapes décrites ci-dessous. Il peut comporter d'autres étapes en amont, en aval, ou intermédiaires. Les étapes du procédé peuvent être menées en continu ou discontinu, dans des dispositifs séparés les uns des autres, ou au sein de mêmes dispositifs. Les étapes essentielles sont les suivantes:

a) estérification ou transestérification par un diol d'un diacide carboxylique ou d'un diester de diacide carboxylique,
b) prépolymérisation du produit d'estérification ou de transestérification en phase liquide jusqu'à un degré de polymérisation moyen compris entre 10 et 50, de préférence entre 20 et 45,
c) réalisation d'une dispersion de prépolymère dans un liquide non solvant du diol et non gonflant du prépolymère, le prépolymère étant présent dans la dispersion sous forme de particules solides de diamètre inférieur à 2 mm et cristallisées, avec une épaisseur de lamelles cristallines inférieure à 17 nm,
d) polymérisation en phase solide dispersée,
e) récupération des particules solides.

Le procédé peut être appliqué à la polymérisation de tout diacide carboxylique avec tout diol. Il peut être appliqué notamment aux diacides suivants: acide téréphtalique, acide isophtalique, acide naphtalènedioïque, acide sulfo-5-isophtalique et leurs mélanges. Il peut être appliqué notamment aux diols suivants: éthylène glycol, butane diol, neopentyle glycol, diéthylène glycol, bisphénol, 1-3 propane diol, 1-2 propane diol, cyclohexyldiméthanol, et leurs mélanges.

Le procédé peut être appliqué plus particulièrement à la synthèse du poly(éthylène téréphtalate), à partir des monomères d'acide téréphtalique ou de téréphtalate de méthyle et d'éthylène glycol.

L'étape a) d'estérification ou de transestérification est une étape communément réalisée dans les procédés industriels de fabrication de polyesters. Deux voies sont par exemple principalement employées pour la fabrication de poly(éthylène téréphtalate).

La première voie d'obtention est la voie dite "téréphtalate de méthyle" (DMT). Il s'agit d'une réaction de transestérification. Le DMT fondu est solubilisé dans l'éthylène glycol (EG) présent en excès, le rapport molaire EG/DMT étant d'environ 1.9 à 2.2, et la réaction est menée à pression atmosphérique à des températures d'environ 130°C à 250°C. Elle nécessite la présence d'un catalyseur comme par exemple l'acétate de manganèse. Le méthanol dégagé par la réaction est éliminé par distillation. L'éthylène glycol présent en excès est éliminé par évaporation après la réaction de transestérification. Le catalyseur qui est aussi un catalyseur de la dégradation du polyester est bloqué à l'aide de composés phosphorés après la réaction. Le produit résultant de la transestérification est un mélange de bis-hydroxyéthyl-téréphtalate (BHET) et d'oligomères.

La deuxième voie est la voie dite "estérification directe". Il s'agit d'une réaction d'estérification de l'acide téréphtalique par l'éthylène glycol. Elle est effectuée à des températures de 130°C à 280°C. L'acide téréphtalique, fondu à ces températures, n'est pas soluble dans l'éthylène glycol mais l'est dans l'ester produit de la réaction. La solubilisation du réactif dans le milieu est donc progressive. L'éthylène glycol est présent avec un rapport molaire EG/ Acide Téréphtalique d'environ 1 à 3. Il résulte de cette réaction un mélange d'oligomères ayant des fonctions de terminaison sous forme d'acide téréphtalique ou de téréphtalate d'hydroxyéthyle.

L'utilisation de ces procédés fait l'objet de nombreuses études décrites dans la littérature. Les conditions indiquées ci-dessus ne constituent pas une limitation à la portée de la présente invention.

Les étapes ultérieures de prépolymérisation et de polymérisation en phase solide sont des étapes de polymérisation par condensation. Elles sont généralement catalysées à l'aide de composés métalliques, par exemple par des composés de l'antimoine, du titane ou du germanium. Elles peuvent être catalysées par tout catalyseur du polycondensation décrit dans l'art antérieur.

L'étape b) de prépolymérisation en phase liquide peut être effectuée de préférence selon deux modes de réalisation. Le premier mode de réalisation consiste à effectuer la prépolymérisation en phase fondue. Le deuxième mode de réalisation consiste à effectuer la prépolymérisation en phase fondue dispersée dans un milieu liquide. La mise en oeuvre de ces deux modes sera décrite ultérieurement. Le prépolymère obtenu est de degré de polymérisation moyen compris entre 10 et 50, de préférence entre 20 et 45.

Par degré de polymérisation moyen, on entend le degré de polymérisation moyen absolu défini par la formule suivante:

$$DP_n = \frac{1}{M_0} * \frac{\sum_i n_i M_i}{\sum_i n_i} = \frac{M_n}{M_0}$$

où $M_o$ est la masse molaire du motif de répétition du polymère, $M_i$ est la masse molaire de la chaîne de taille référencée i, et $n_i$ est le nombre de chaînes de taille référencée i. Les masses molaires sont les masses molaires absolues.

Le degré de polymérisation moyen est relié à la masse molaire moyenne en nombre $M_n$ absolue, selon la formule ci-dessus. Cette dernière est évaluée par Chromatographie par Perméation de Gel (GPC) avec couplage viscosimétrique.

La viscosité en solution du polymère est liée à la longueur des chaînes et donc à la masse molaire moyenne en nombre et au degré de polymérisation moyen. C'est un indicateur d'avancement de la polymérisation.

Dans le présent document, on entend par indice de viscosité (IV), la viscosité en ml/g mesurée à 25°C à l'aide d'un viscosimètre de type Ubbelohde pour une solution à 0.005 g/ml de polymère dissout à 115°C dans un mélange composé de 50% en poids de phénol et de 50% en poids de 1-2 dichlorobenzène. Pour le PET, une corrélation entre l'indice de viscosité et le degré moyen de polymérisation évalué par GPC a été établie:

$$DP_n = 1.19 * IV - 7$$

où l'IV est en ml/g.

Cette corrélation est valable pour des indices de viscosité compris entre 10 et 70 ml/g.

L'étape c) consiste à réaliser une dispersion dans un liquide de prépolymère issu de l'étape b). Le prépolymère dispersé est sous forme de particules solides. Le liquide de dispersion utilisé ne doit pas être solvant du diol et ne doit pas être un milieu gonflant du prépolymère. Pour la mise en oeuvre de l'étape ultérieure de polymérisation en phase solide dispersée, les particules solides doivent être de diamètre inférieur à environ 2 mm, de préférence 1 mm, et cristallisées avec une épaisseur des lamelles cristallines inférieure à environ 17 nm, de préférence inférieure à environ 12 nm. La formation de la dispersion de particules solides peut être réalisée selon plusieurs modes. Les modes dé formation de la dispersion peuvent en particulier dépendre du mode de réalisation de l'étape de prépolymérisation. On distingue deux types de modes de formation de dispersion: Un premier mode de réalisation de la dispersion consiste à solidifier le prépolymère sous forme de particules et à l'isoler (première phase) puis à mettre en présence les particules avec le milieu de dispersion (deuxième phase). Un deuxième mode de réalisation de la dispersion consiste à effectuer les deux phases simultanément, la solidification du prépolymère ayant lieu au sein du milieu de dispersion. Ces modes de réalisation seront détaillés ultérieurement.

L'étape d) de polymérisation en phase solide dispersée dans un milieu liquide permet d'obtenir des cinétiques de polymérisation élevées dans le cas où les particules solides de prépolymère ont les caractéristiques décrites précédemment, et obtenues par les procédés par exemple décrits dans le présent document.

L'étape de polymérisation en phase solide dispersée dans un milieu liquide doit être réalisée dans un milieu non solvant du diol mis en réaction et non gonflant du prépolymère. Plus particulièrement, pour la fabrication de poly (éthyléne téréphtalate), le milieu ne doit pas être solvant de l'éthylène glycol. Cette caractéristique a pour but de permettre l'élimination du diol et d'accélérer la réaction de polymérisation.

Comme liquides convenables pour la mise en oeuvre de l'invention, on peut citer les composés hydrocarbonés. Ces composés peuvent être issus par exemple d'une coupe d'hydrocarbures aliphatiques possédant un nombre d'atomes de carbone inférieur ou égal à 20. La coupe d'hydrocarbures peut être un produit liquide à pression atmosphérique à la température de polymérisation en phase dispersée. La condensation en phase solide dispersée peut aussi être avantageusement effectuée dans une coupe d'hydrocarbures gazeuse à pression atmosphérique à une température supérieure à 150°C et maintenue à l'état liquide sous pression lors de la polymérisation en phase solide dispersée. Un tel milieu est éliminé par détente en fin de procédé, afin de récupérer le polymère.

L'élimination du diol au sein du milieu est facilitée par entraînement par un flux de gaz inerte. Le gaz peut être avantageusement introduit par barbotage dans le milieu de dispersion. Il peut être choisi par exemple parmi l'azote, les gaz rares, les gaz inertés comme par exemple l'air enrichi en azote, le dioxyde de carbone, et leurs mélanges. La présence du gaz inerte permet de plus d'éviter toute présence d'oxygène au sein du milieu et ainsi d'éviter une dégradation du polyester. Le milieu de dispersion entraîné peut être recyclé dans le milieu réactionnel après collection et démixtion du diol.

Afin de stabiliser la dispersion des particules solides de prépolymère à condenser, il est possible, sans que cela doive constituer une limitation au procédé décrit, d'ajouter au milieu liquide un agent. Cet agent de stabilisation est avantageusement un composé ayant des propriétés tensio-actives comportant une partie polaire et une partie apolaire et ne comportant aucune fonction réactive dans le milieu. Il peut être par exemple choisi parmi les alkyl-phénol-poly(éthoxylé) protégés, par exemple le nonyl-phénol-poly(éthoxylé) protégé, et les alcanes poly(éthoxylé) protégés. La protection est réalisée par alkoxylation, par exemple par une penthoxylation pour les nonyl-phénol-poly(éthoxylé) ou par une méthoxylation pour les alcanes poly(éthoxylé). Comme exemple d'alcane poly(éthoxylé) protégé on peut citer l'alcane en $C_{14}$ éthoxylé 11 à 12 fois.

La polymérisation en phase solide dispersée est réalisée à des températures auxquelles les particules dispersées sont à l'état solide. La température peut varier au cours de l'avancement de la réaction, généralement en augmentant, mais doit toujours rester inférieure à la température provoquant la fusion des particules les plus fusibles présentes dans le milieu. La présence de particules à l'état fondu facilite les phénomènes d'agrégation de particules et diminue la vitesse de polymérisation. Par exemple la polymérisation en phase solide dispersée peut être effectuée à une température inférieure de 10°C à la température de fusion du polymère dispersé.

La dispersion est caractérisée en ce que les particules solides ont un diamètre inférieur à 2 mm. Par diamètre on entend le diamètre moyen des particules dispersées. De préférence le diamètre des particules solides est inférieur à 1 mm.

Les particules dispersées doivent présenter des caractéristiques cristallines particulières pour la mise en oeuvre d'une condensation en phase solide dispersée. L'épaisseur des lamelles cristallines des particules doit être inférieure à environ 17 nm et de préférence inférieure à environ 12 nm.

Par épaisseur des lamelles cristallines, on entend la longueur mesurée par diffraction aux grands angles (WAXS) selon la référence suivante:

N.S. Murphy and H. Minor, "General procedure for evaluating amorphous scattering scans cristallinity from X-ray diffraction scans of semicristalline polymers", Poly., vol.31, 996-1002 (1990).

Cette méthode consiste à repérer le pic de diffraction correspondant à la réflexion cristalline sur le plan d'indices de Miller (010) à un angle 2β de 17.8°. La dimension moyenne $ACS_{010}$ du cristal est donnée par l'équation de Scherrer:

$$ACS_{010} = k*l/(a*\cos \beta),$$

où k=0.9, I est la longueur d'onde du cuivre, a est la largeur à mi-hauteur en radians du pic de diffraction.

La formation des particules solides et leur dispersion dans le milieu de dispersion non solvant du diol et non gonflant du prépolymère, simultanée ou subséquentes, peuvent dépendre du mode de réalisation de l'étape b) de prépolymérisation. Deux modes de réalisation de la prépolymérisation conviennent pour la mise en oeuvre de l'invention.

Le premier mode de prépolymérisation est une prépolymérisation en phase fondue dispersée en gouttelettes dans un milieu liquide. Elle est réalisée en mettant en présence avec un milieu liquide chauffé un produit de type de celui obtenu par l'étape a), fondu, auquel est éventuellement ajouté un catalyseur. Ce milieu ne doit pas être solvant des composés mis en jeu. Le milieu peut être exactement le même que celui réalisé pour la polymérisation ultérieure en phase solide dispersée. Il peut être différent de celui qui sera utilisé ultérieurement. Il peut donc être constitué des mêmes types de composants, hydrocarbures par exemple, être soumis identiquement à un flux gazeux, et comporter un ou des stabilisants. L'ajout d'un stabilisant peut permettre en outre de mieux contrôler la dispersion du prépolymère fondu et d'éviter la coalescence des gouttelettes. L'emploi de l'alcane en $C_{14}$ éthoxylé 11 à 12 fois et protégé par une méthoxylation donne des résultats particulièrement remarquables. Les caractéristiques des milieux ont été décrites de manière détaillée ci-dessus. La température de réaction doit être contrôlée pour maintenir à l'état fondu le composé à prépolymériser, par exemple au dessus de 220°C. Elle peut être augmentée au cours de la réaction, par exemple jusqu'à environ 260°C. La prépolymérisation est réalisée jusqu'à obtenir un degré de polymérisation moyen compris entre 10 et 50, de préférence entre 20 et 45. A ce stade du procédé, le produit de prépolymérisation se trouve dispersé à l'état fondu dans un milieu de dispersion de température supérieure à la température de fusion du prépolymère.

Le deuxième mode de prépolymérisation est une prépolymérisation en phase fondue. Elle est réalisée par chauffage de produit de type de celui obtenu par l'étape a), auquel est éventuellement ajouté un catalyseur, le produit étant à l'état liquide et constituant la masse du milieu. La prépolymérisation en phase fondue peut être réalisée comme suit: Un mélange de composé à prépolymériser et de catalyseur est chauffé à une température supérieure à la température de fusion dudit composé, au dessus de 200°C, de préférence au dessus d'environ 260°C. La réaction peut être avantageusement réalisée sous pression réduite afin de favoriser le dégagement d'éthylène glycol, et éventuellement d'eau lorsque le précurseur employé dans l'étape a) est un diacide carboxylique. Elle peut éventuellement être réalisée avec un balayage ou un barbotage de gaz inerte. Ceci facilite l'élimination de l'éthylène glycol présent dans le milieu. La prépolymérisation est réalisée jusqu'à obtenir un degré de polymérisation moyen compris entre 10 et 50, de préférence entre 20 et 45. A ce stade du procédé le produit de prépolymérisation se trouve à l'état fondu isolé de tout milieu de dispersion.

Le produit de prépolymérisation selon le mode de réalisation en phase fondue peut être transformé à l'état de particules solides cristallisées et dispersé selon plusieurs modes. La cristallisation est réalisée à une température comprise dans la plage des températures de cristallisation du prépolymère. Cette plage est comprise entre les températures suivantes: température de transition vitreuse plus 25% de la différence entre les températures de fusion et de transition vitreuse et température de fusion moins 25% de la même différence.

Un premier mode consiste à solidifier le prépolymère fondu rapidement et à le mettre en forme de particules solides de diamètre inférieur à 2 mm, de préférence 1 mm, puis à mettre en présence les particules obtenues avec le milieu de dispersion non solvant du diol. La mise en forme peut être effectuée par exemple par broyage ou par section de joncs de diamètre inférieur à 2 mm, de préférence 1 mm. Un deuxième mode consiste à pulvériser le produit de prépolymérisation dans un fluide gazeux de température comprise dans la plage des températures de cristallisation du prépolymère. La pulvérisation doit être effectuée sous forme de gouttelettes de diamètre inférieur à 2 mm, de préférence 1 mm. Les gouttelettes solidifiées au contact du gaz sont ensuite mises en présence du milieu de dispersion non solvant du diol et non gonflant du prépolymère. Un troisième mode de réalisation consiste à pulvériser le produit de prépolymérisation dans le milieu de dispersion non solvant du diol et non gonflant du prépolymère, ledit milieu étant à une température comprise dans la plage des températures de cristallisation du prépolymère. La solidification et la formation de la dispersion sont ici simultanées. Un quatrième mode de réalisation comporte une première phase qui consiste à pulvériser le produit de prépolymérisation dans le milieu de dispersion non solvant du diol et non gonflant du prépolymère, ledit milieu étant à une température supérieure à la température de fusion du prépolymère. Après cette première phase, le produit de prépolymérisation se trouve dispersé à l'état fondu dans un milieu de dispersion de température supérieure à la température de fusion du prépolymère.

Lorsque le produit de prépolymérisation se trouve dispersé à l'état fondu dans un milieu de dispersion de température supérieure à la température de fusion du prépolymère, soit à l'issue de la première phase du quatrième mode de dispersion après une prépolymérisation en phase fondue, soit à l'issue d'une prépolymérisation en phase fondue dispersée dans un milieu liquide, la réalisation de la dispersion peut être principalement effectuée selon deux modes de réalisation. Dans un premier mode de réalisation, le milieu de dispersion est refroidi rapidement à une température comprise dans la plage des températures de cristallisation du prépolymère. Ce refroidissement peut être par exemple effectué par dilution avec du liquide froid constituant le milieu de dispersion. Le produit issu de ce refroidissement est la suspension de particules solides dans un liquide non solvant du diol et non gonflant du prépolymère.

Un deuxième mode de réalisation peut être mis en oeuvre si le milieu liquide de dispersion de la phase fondue est un produit gazeux à une température supérieure à 150°C et maintenu sous pression à l'état liquide. Ce mode consiste à imposer au milieu une détente à température comprise dans la plage des températures de cristallisation du prépolymère et à ainsi solidifier le prépolymère initialement fondu en suspension. Les particules sont ensuite mises en présence du milieu de dispersion non solvant du diol et non gonflant du prépolymère.

L'enchaînement au sein d'un même milieu des étapes de prépolymérisation en phase fondue dispersée, de la réalisation de la dispersion des particules solides et de polymérisation en phase solide dispersée est un mode de réalisation particulièrement simple et efficace.

L'étape e) est une étape au cours de laquelle le produit de la polymérisation en phase solide dispersée dans un milieu liquide est isolé du milieu de dispersion. L'isolation peut être réalisée par tout moyen permettant de séparer d'une phase liquide une phase solide en suspension. L'isolation peut consister par exemple en une filtration, une décantation ou une déstabilisation de la dispersion. Si le milieu de dispersion est un milieu liquide constitué d'un composé gazeux à pression atmosphérique liquéfié sous pression, l'isolation peut être effectuée par détente du milieu.

Les particules solides peuvent être lavées par tout composé approprié puis séchées. Comme composé de lavage on peut citer par exemple l'heptane.

Les particules solides peuvent être directement utilisées pour applications, par exemple pour l'extrusion, ou être compactées sous forme de pastilles ou de granulés.

D'autres détails ou avantages de l'invention apparaîtront plus clairement au vu des exemples donnés ci-dessous uniquement à titre indicatif.

Exemple 1

Un prépolymère de poly(éthylène téréphtalate) d'indice de viscosité (IV initial) de 42 ml/g, c'est à dire de degré de polymérisation moyen de 43, est préparé selon un procédé classique d'estérification directe, en phase fondue, à partir d'acide téréphtalique purifié et d'éthylène glycol, en présence de 250 ppm de catalyseur. Le catalyseur utilisé est l'oxyde d'antimoine.

Le prépolymère est solidifié en masse puis broyé avec de la carboglace. Le produit de broyage est tamisé. Les différentes granulométries sont séparées en des échantillons dont les particules ont des diamètres respectivement compris entre 125 et 250 µm, 250 et 500 µm, 500 et 1000 µm. Les poudres tamisées sont séchées sous vide à 130°C pendant 3 heures. L'épaisseur des lamelles cristallines est mesurée: 11.5 nm.

Les poudres sont dispersées dans 100 ml d'une coupe d'hydrocarbures de $C_{14}$ à $C_{17}$ (commercialisée par la société Halterman) dans un réacteur ballon de 0.5 l équipé d'un système d'agitation, d'un condenseur de type Dean Stark couplé à un réfrigérant, d'un thermocouple et d'une arrivée d'argon surmontée d'une chambre de prélèvement maintenu sous argon. Le taux de solide introduit (masse de prépolymère solide introduit sous forme de poudre par rapport à la masse de milieu dispersant) est de 6.2%.

Le ballon est chauffé. Les températures au sein du milieu de dispersion sont mesurées à l'aide du thermocouple. La polymérisation en phase solide dispersée est réalisée à différentes températures de chauffage pour une taille de particules comprise entre 125 et 250 µm. L'avancement de la polymérisation est mesuré par l'évolution de l'indice de viscosité (IV). Le tableau 1 présente les indices de viscosité mesurés après environ 8 heures (IV 8 heures) de polymérisation en phase solide dispersée pour des températures de chauffage de 200°C à 240°C.

Le polymère est récupéré par filtration. La poudre de polymère obtenue est rincée plusieurs fois à l'heptane et séchée sous vide à 70°C pendant quelques heures.

Tableau 1

| Température de chauffage | $DP_n$ initial | IV initial (ml/g) | IV 8 heures (ml/g) |
|---|---|---|---|
| 200°C | 43 | 42 | 77 |
| 220°C | 43 | 42 | 107 |
| 230°C | 43 | 42 | 134 |
| 240°C | 43 | 42 | 180 |

Des polymérisations en phase solide dispersée sont réalisées selon le même mode de réalisation, à température de 220°C, pour différentes tailles de particules isolées par tamisage. Le tableau 2 présente les indices de viscosité mesurés après environ 8 heures (IV 8 heures) de polymérisation en phase solide dispersée pour des tailles de particules respectivement comprises entre 125 et 250 µm, 250 et 500 µm, 500 et 1000 µm.

Tableau 2

| Taille des particules (μm) | $DP_n$ initial | IV initial (ml/g) | IV 8 heures (ml/g) |
|---|---|---|---|
| 125-250 | 43 | 42 | 107 |
| 250-500 | 43 | 42 | 100 |
| 500-1000 | 43 | 42 | 95 |

Exemples comparatifs

On compare l'efficacité d'une polymérisation en phase solide dispersée dans un milieu liquide avec l'efficacité d'une condensation en phase solide classique en milieu gazeux (post-condensation classique).

On effectue une condensation en phase solide en milieu gazeux sur une poudre de prépolymère d'indice de viscosité de 42 ml/g, d'épaisseur de lamelles cristallines de 11.5 nm, et de taille de particules comprise entre 125 et 250 μm. Cette poudre est obtenue selon le mode de réalisation décrit dans l'exemple 1.

La poudre est placée dans un ballon de 100 ml fixé sur un appareil lui permettant de tourner autour de son axe. Le ballon en rotation est immergé dans un bain d'huile silicone chauffé de manière à ce que la température de la poudre soit de 220°C. Le système est balayé par un courant d'azote. L'avancement de la condensation est mesuré par l'évolution de l'indice de viscosité (IV). Le tableau 3 présente les indices de viscosité mesurés après environ 8 heures (IV 8 heures) de condensation soit un phase solide dispersée dans un milieu gazeux, soit en phase solide dispersée dans un milieu liquide.

La condensation en phase solide dispersée dans un milieu liquide est réalisée dans les mêmes conditions, à 220°C, et pour une poudre dont les granulés ont une taille comprise entre 125 et 250 μm. Cette réalisation est décrite dans l'exemple 1.

Le tableau 4 présente les résultats obtenus suite à des réalisations identiques, avec une température de condensation de 200°C.

Tableau 3

| Condensation en phase solide: | IV initial (ml/g) | $DP_n$ initial | IV 8 heures (ml/g) |
|---|---|---|---|
| dispersée en milieu gazeux | 42 | 43 | 90 |
| dispersée en milieu liquide | 42 | 43 | 107 |

Tableau 4

| Condensation en phase solide: | IV initial (ml/g) | $DP_n$ initial | IV 8 heures (ml/g) |
|---|---|---|---|
| dispersée en milieu gazeux | 42 | 43 | 68 |
| dispersée en milieu liquide | 42 | 43 | 77 |

Exemple 2

Des condensations ont été effectuées sur des prépolymères de différents degrés de polymérisation ($DP_n$ initial). L'épaisseur des lamelles cristallines (e) est mesurée et présentée en tableau 5. Ces prépolymères sont préparés de la même manière que pour les exemples précédents. Les condensations en phase solide dispersée dans un milieu gazeux (CS) et en phase solide dispersée dans un milieu liquide (CSd) sont réalisées selon le même procédé.

Les conditions de réalisation sont les suivantes:

- taille des particules: 125μm à 250 μm
- température de condensation: 220°C

Tableau 5

| $DP_n$ initial | e (nm) | IV initial | CS IV (8 heures) | CSd IV (8 heures) |
|---|---|---|---|---|
| 31.5 | 10.5 | 29.5 | 77 | 110 |

Tableau 5   (suite)

| DP$_n$ initial | e (nm) | IV initial | CS IV (8 heures) | CSd IV (8 heures) |
|---|---|---|---|---|
| 43 | 11.5 | 42 | 90 | 107 |

Exemple 3

Cet exemple illustre un mode de réalisation selon lequel la prépolymérisation est effectuée en phase fondue dispersée dans un milieu liquide.

On installe un réacteur ballon de 0.5 litre, équipé d'un système d'agitation, d'un condenseur de type Dean Stark couplé à un réfrigérant et à une ampoule de coulée, d'un thermocouple et d'une arrivée d'argon surmontée d'une chambre de prélèvement maintenue sous ce gaz.

On charge dans le réacteur 100 g du produit issu de l'estérification de l'acide téréphtalique (PTA) par l'éthylène glycol. On le fait fondre et on ajoute par rapport à la masse de PTA initiale, 270 ppm d'acétate d'antimoine dilués dans de l'éthylène glycol et introduits sur le produit de transestérification fondu à l'aide d'une seringue.

On introduit à l'aide de l'ampoule de coulée 100 ml d'une coupe d'hydrocarbures aliphatiques en C$_{14}$ à C$_{17}$ chauffée au préalable à 250°C.

Un débit constant de 15 ml/s d'argon est maintenu dans le réacteur tout au long de la synthèse La synthèse est effectuée à pression atmosphérique. Le réacteur est chauffé à l'aide d'un bain d'huile silicone.

La température est maintenue à 250°C pendant 2 heures. Le produit se trouve à l'état fondu dispersé dans la coupe.

Une trempe est réalisée par ajout de coupe à 20°C, réalisant une dilution par 4. Toute la suspension liquide-liquide se disperse alors en particules solides de prépolymère dans le milieu liquide. Le prépolymère obtenu est lavé à l'heptane à 70°C sous vide pendant quelques heures. Il est ensuite tamisé à des diamètres inférieurs à 250 μm.

On introduit dans le réacteur 20 g de poudre de prépolymère ainsi préparé et 200 ml de coupe d'hydrocarbures. La température du réacteur est ensuite portée à 220°C. Cette Température est maintenue pendant 8 heures.

Lors de la condensation, l'éthylène glycol (sous-produit de la réaction) et la coupe sont entraînés par le débit d'argon. Ils se condensent dans le Dean Stark où une démixtion de phase permet de recueillir l'éthylène glycol tandis que le surnageant (la coupe) repart dans le réacteur, permettant ainsi de maintenir une dilution constante de polymère dans le milieu diluant.

Après huit heures de condensation la poudre de polymère obtenue est rincée plusieurs fois à l'heptane et séchée sous vide à 70°C pendant quelques heures.

Les indices de viscosité (IV) et épaisseurs des lamelles cristallines sont évalués sur le prépolymère (après la trempe), puis sur le polymère après huit heures de condensation en phase solide dispersée dans un milieu liquide. Les résultats sont présentés tableau 6.

Tableau 6

|  | IV (ml/g) | DP$_n$ | épaisseur des lamelles (nm) |
|---|---|---|---|
| Prépolymère | 24.7 | 22 | 5.7 |
| Polymère (8 heures) | 66 | 71.7 | 6 |

**Revendications**

**1.** Procédé de fabrication de polyester comprenant les étapes suivantes:

a) estérification ou transestérification par un diol d'un diacide carboxylique ou d'un diester de diacide carboxylique,

b) prépolymérisation du produit d'estérification ou de transesterification en phase liquide jusqu'à un degré de polymérisation moyen compris entre 10 et 50, de préférence entre 20 et 45,

c) réalisation d'une dispersion de prépolymère dans un liquide non solvant du diol et non gonflant du prépolymère, le prépolymère étant présent dans la dispersion sous forme de particules solides de diamètre inférieur à 2 mm et cristallisées, avec une épaisseur de lamelles cristallines inférieure à 17 nm,

d) polymérisation en phase solide dispersée,

e) récupération des particules solides.

**2.** Procédé selon la revendication 1 **caractérisé en ce que** les diacides carboxyliques sont choisis parmi l'acide téréphtalique, l'acide isophtalique, l'acide naphtalènedioïque, l'acide sulfo-5-isophtalique, et leurs mélanges.

**3.** Procédé selon l'une des revendications 1 ou 2 **caractérisé en ce que** le diol est choisi parmi l'éthylène glycol, le butane diol, le neopentyle glycol, le diethylène glycol, les bisphenols, le 1-3 propane diol, le 1-2 propane diol, le cyclohexyldiméthanol, et leurs mélanges.

**4.** Procédé selon l'une des revendications 1 à 3 **caractérisé en ce que** l'étape b) de prépolymérisation est catalysée.

**5.** Procédé selon l'une des revendications 1 à 4 **caractérisé en ce que** l'étape d) de polymérisation en phase solide dispersée est catalysée.

**6.** Procédé selon l'une des revendications 1 à 5 **caractérisé en ce que** l'épaisseur des lamelles cristallines des particules solides obtenues par l'étape c) est inférieure à 12 nm.

**7.** Procédé selon l'une des revendications 1 à 6 **caractérisé en ce que** le diamètre des particules solides obtenues par l'étape c) est inférieur à 1 mm.

**8.** Procédé selon l'une des revendications 1 à 7 **caractérisé en ce que** le milieu liquide de dispersion des particules solides est une coupe d'hydrocarbures.

**9.** Procédé selon la revendication 8 **caractérisé en ce que** les composés de la coupe d'hydrocarbures sont aliphatiques et possèdent un nombre d'atomes de carbone inférieur à 20.

**10.** Procédé selon la revendication 9 **caractérisé en ce que** la coupe d'hydrocarbures est un produit liquide à pression atmosphérique à la température de polymérisation en phase dispersée.

**11.** Procédé selon l'une des revendications 8 ou 9 **caractérisé en ce que** la coupe d'hydrocarbures est un produit gazeux à pression atmosphérique à une température supérieure à 150°C et **en ce que** le milieu est maintenu sous pression à l'état liquide lors de l'étape de polymérisation en phase dispersée.

**12.** Procédé selon l'une des revendications 1 à 11 **caractérisé en ce que** le milieu de dispersion contient un composé stabilisant ayant des propriétés tensio-actives.

**13.** Procédé selon la revendication 12 **caractérisé en ce que** le composé ayant des propriétés tensio-actives est choisi parmi les alkyl-phénol-poly(éthoxylé) protégés et les alcanes poly(éthoxylé) protégés.

**14.** Procédé selon l'une des revendications 1 à 13 **caractérisé en ce que** la polymérisation en phase solide dispersée est réalisée sous un flux de gaz inerte.

**15.** Procédé selon la revendication 14 **caractérisé en ce que** le flux de gaz inerte est introduit par barbotage dans le milieu liquide de dispersion.

**16.** Procédé selon l'une des revendications 14 ou 15 **caractérisé en ce que** le gaz inerte est choisi parmi l'azote, les gaz rares, les gaz inertés, l'air enrichi en azote, le dioxyde de carbone, et leurs mélanges.

**17.** Procédé selon l'une des revendications 1 à 16 **caractérisé en ce que** la polymérisation en phase solide dispersée est réalisée à des températures inférieures à la température de fusion des particules les plus fusibles présentes dans le milieu.

**18.** Procédé selon l'une des revendications 1 à 17 **caractérisé en ce que** la prépolymérisation est effectuée en phase fondue dispersée dans un milieu liquide.

**19.** Procédé selon la revendication 18 **caractérisé en ce que** le milieu de dispersion de la phase fondue contient un composé stabilisant ayant des propriétés tensio-actives.

**20.** Procédé selon la revendication 19 **caractérisé en ce que** le composé tensioactif est choisi parmi les alkyl-phénol-poly(éthoxylé) protégés , les alcanes poly(éthoxylé) protégés.

**21.** Procédé selon l'une des revendications 18 à 20 **caractérisé en ce que** la polymérisation en phase solide dispersée est réalisée sous un flux de gaz inerte.

**22.** Procédé selon la revendication 21 **caractérisé en ce que** le flux de gaz inerte est introduit par barbotage dans le milieu liquide de dispersion.

**23.** Procédé selon l'une des revendications 21 ou 22 **caractérisé en ce que** le gaz inerte est choisi parmi l'azote, les gaz rares, les gaz inertes, l'air enrichi en azote, le dioxyde de carbone, et leurs mélanges.

**24.** Procédé selon l'une des revendications 18 à 23 **caractérisé en ce que** le milieu liquide de dispersion de la phase fondue est une coupe d'hydrocarbures.

**25.** Procédé selon la revendication 24 **caractérisé en ce que** les composés de la coupe d'hydrocarbures sont aliphatiques et possèdent un nombre d'atomes de carbone inférieur à 20.

**26.** Procédé selon la revendication 25 **caractérisé en ce que** la coupe d'hydrocarbures est un produit liquide à pression atmosphérique à la température de polymérisation en phase dispersée.

**27.** Procédé selon l'une des revendications 24 ou 25 **caractérisé en ce que** la coupe d'hydrocarbures est un produit gazeux à pression atmosphérique à une température supérieure à 150°C et **en ce que** le milieu est maintenu sous pression à l'état liquide lors de l'étape de polymérisation en phase dispersée.

**28.** Procédé selon la des revendication 18 **caractérisé en ce que** les étapes de prépolymérisation en phase fondue dispersée et de polymérisation en phase solide dispersée sont réalisées dans le même milieu liquide selon l'une des revendications 8 à 13.

**29.** Procédé selon l'une des revendications 1 à 18 **caractérisé en ce que** la prépolymérisation est réalisée en phase fondue.

**30.** Procédé selon la revendication 29 **caractérisé en ce que** l'étape c) comporte une phase de solidification rapide du prépolymère fondu, une phase de formation de particules de diamètre inférieur à 2 mm et une phase de mise en présence des granulés ou particules avec le milieu de dispersion.

**31.** Procédé selon la revendication 30 **caractérisé en ce que** la formation de particules est réalisée par broyage.

**32.** Procédé selon la revendication 32 **caractérisé en ce que** la solidification est réalisée sous forme de joncs de diamètre inférieur à 2 mm et que la formation de particules est réalisée par section desdits joncs.

**33.** Procédé selon la revendication 29 **caractérisé en ce que** l'étape c) comporte une phase de formation de particules solides de prépolymère par pulvérisation du prépolymère à l'état fondu sous forme de gouttelettes de diamètre inférieur à 2 mm, dans un fluide gazeux de température comprise dans la plage des températures de cristallisation du prépolymère et une phase de mise en présence des particules solides obtenues avec le milieu de dispersion.

**34.** Procédé selon la revendication 29 **caractérisé en ce que** l'étape c) comporte une phase de formation de particules solides de prépolymère par pulvérisation du prépolymère à l'état fondu sous forme de gouttelettes de diamètre inférieur à 2 mm, dans un fluide liquide selon l'une des revendications 8 à 13, de température comprise dans la plage des températures de cristallisation du prépolymère.

**35.** Procédé selon la revendication 29 **caractérisé en ce que** l'étape c) comporte une phase de pulvérisation de prépolymère à l'état fondu, sous forme de gouttelettes de diamètre inférieur à 2 mm, dans un liquide de température supérieure à la température de fusion du prépolymère, et une phase de solidification et cristallisation.

**36.** Procédé selon la revendication 35 **caractérisé en ce que** le liquide est le milieu de dispersion de l'étape d) de polymérisation en phase solide dispersée selon l'une des revendications 8 à 13.

**37.** Procédé selon la revendication 35 **caractérisé en ce que** le liquide est une coupe d'hydrocarbures gazeuse à pression atmosphérique à une température supérieure à 150°C, maintenu sous pression à l'état liquide.

**38.** Procédé selon l'une des revendications 27 ou 37 **caractérisé en ce que** la dispersion est réalisée par solidification des gouttelettes par détente à pression atmosphérique du milieu liquide puis par mise en présence des particules solides obtenues avec le milieu de dispersion.

**39.** Procédé l'une des revendications 18 à 28 et 36 **caractérisé en ce que** l'étape c) comporte une phase solidification de la suspension de prépolymère fondu par refroidissement à une température comprise dans la plage des températures de cristallisation du prépolymère

**40.** Procédé selon la revendication 39 **caractérisé en ce que** le refroidissement est réalisé par dilution avec du liquide de dispersion froid.


**Patentansprüche**

**1.** Verfahren zur Herstellung von Polyestern umfassend die folgenden Stufen:

a) Veresterung oder Umesterung mit einem Diol von einer Dicarbonsäure oder einem Diester der Dicarbonsäure,
b) Präpolymerisation des Veresterungs- oder Umesterungsprodukts in flüssiger Phase bis zu einem durchschnittlichen Polymerisationsgrad zwischen 10 und 50, vorzugsweise zwischen 20 und 45,
c) Durchführung einer Dispersion des Präpolymeren in einer Flüssigkeit, die das Diol nicht löst und das Präpolymere nicht quillt, wobei das Präpolymere in der Dispersion in Form von festen Teilchen mit einem Durchmesser von geringer als 2 mm in kristallisierter Form mit einer Dicke der kristallinen Lamellen von geringer als 17 nm vorliegt,
d) Polymerisation in disperser fester Phase,
e) Gewinnung der festen Teilchen.

**2.** Verfahren gemäß Anspruch 1, **dadurch gekennzeichnet, dass** die Dicarbonsäuren unter Terephthalsäure, Isophthalsäure, Naphthalindisäure, Sulfo-5-isophthalsäure und deren Gemischen ausgewählt werden.

**3.** Verfahren gemäß einem der Ansprüche 1 oder 2, **dadurch gekennzeichnet, dass** das Diol unter Ethylenglykol, Butandiol, Neopentylglykol, Diethylenglykol, den Bisphenolen, 1,3-Propandiol, 1,2-Propandiol, Cyclohexyldimethanol und deren Gemischen ausgewählt wird.

**4.** Verfahren gemäß einem der Ansprüche 1 bis 3, **dadurch gekennzeichnet, dass** die Präpolymerisationsstufe b) katalysiert wird.

**5.** Verfahren gemäß einem der Ansprüche 1 bis 4, **dadurch gekennzeichnet, dass** die Polymerisationsstufe d) in disperser fester Phase katalysiert wird.

**6.** Verfahren gemäß einem der Ansprüche 1 bis 5, **dadurch gekennzeichnet, dass** die Dicke der kristallinen Lamellen der in Stufe c) erhaltenen festen Teilchen geringer als 12 nm beträgt.

**7.** Verfahren gemäß einem der Ansprüche 1 bis 6, **dadurch gekennzeichnet, dass** der Durchmesser der in Stufe c) erhaltenen festen Teilchen geringer als 1 mm ist.

**8.** Verfahren gemäß einem der Ansprüche 1 bis 7, **dadurch gekennzeichnet, dass** das flüssige Dispersionsmilieu der festen Teilchen eine Kohlenwasserstofffraktion ist.

**9.** Verfahren gemäß Anspruch 8, **dadurch gekennzeichnet, dass** die Verbindungen der Kohlenwasserstofffraktion aliphatisch sind und eine Anzahl an Kohlenstoffatomen von geringer als 20 besitzen.

**10.** Verfahren gemäß Anspruch 9, **dadurch gekennzeichnet, dass** die Kohlenwasserstofffraktion ein unter Atmosphärendruck bei der Polymerisationstemperatur in disperser Phase flüssiges Produkt ist.

**11.** Verfahren gemäß einem der Ansprüche 8 oder 9, **dadurch gekennzeichnet, dass** die Kohlenwasserstofffraktion ein unter Atmosphärendruck bei einer Temperatur oberhalb 150°C gasförmiges Produkt ist und dass das Milieu unter Druck in flüssigem Zustand bei der Polymerisationsstufe in disperser Phase gehalten wird.

**12.** Verfahren gemäß einem der Ansprüche 1 bis 11, **dadurch gekennzeichnet, dass** das Dispersionsmilieu eine stabilisierende Verbindung mit oberflächenaktiven Eigenschaften enthält.

**13.** Verfahren gemäß Anspruch 12, **dadurch gekennzeichnet, dass** die Verbindung mit oberflächenaktiven Eigenschaften unter geschützten poly(ethoxylierten) Alkylphenolen und geschützten poly(ethoxylierten) Alkanen ausgewählt wird.

**14.** Verfahren gemäß einem der Ansprüche 1 bis 13, **dadurch gekennzeichnet, dass** die Polymerisation in disperser fester Phase unter einem Strom eines inerten Gases durchgeführt wird.

**15.** Verfahren gemäß Anspruch 14, **dadurch gekennzeichnet, dass** der Strom des inerten Gases durch Barbotage in das flüssige Dispersionsmilieu eingebracht wird.

**16.** Verfahren gemäß einem der Ansprüche 14 oder 15, **dadurch gekennzeichnet, dass** das inerte Gas unter Stickstoff, den Edelgasen, den Inertgasen, mit Sauerstoff angereicherter Luft, Kohlendioxid und deren Gemischen ausgewählt wird.

**17.** Verfahren gemäß einem der Ansprüche 1 bis 16, **dadurch gekennzeichnet, dass** die Polymerisation in disperser fester Phase bei Temperaturen unterhalb der Schmelztemperatur der in dem Milieu vorhandenen, am leichtesten schmelzenden Teilchen durchgeführt wird.

**18.** Verfahren gemäß einem der Ansprüche 1 bis 17, **dadurch gekennzeichnet, dass** die Präpolymerisation in disperser geschmolzener Phase in einem flüssigen Milieu durchgeführt wird.

**19.** Verfahren gemäß Anspruch 18, **dadurch gekennzeichnet, dass** das Dispersionsmilieu der geschmolzenen Phase eine stabilisierende Verbindung mit oberflächenaktiven Eigenschaften enthält.

**20.** Verfahren gemäß Anspruch 19, **dadurch gekennzeichnet, dass** die oberflächenaktive Verbindung unter den geschützten poly(ethoxylierten) Alkylphenolen und den geschützten poly(ethoxylierten) Alkanen ausgewählt wird.

**21.** Verfahren gemäß einem der Ansprüche 18 bis 20, **dadurch gekennzeichnet, dass** die Polymerisation in disperser fester Phase unter einem Strom eines Inertgases durchgeführt wird:

**22.** Verfahren gemäß Anspruch 21, **dadurch gekennzeichnet, dass** der Strom des Inertgases durch Barbotage in das flüssige Dispersionsmilieu eingebracht wird.

**23.** Verfahren gemäß einem der Ansprüche 21 oder 22, **dadurch gekennzeichnet, dass** das inerte Gas unter Stickstoff, den Edelgasen, den inerten Gasen, mit Stickstoff angereicherter Luft, Kohlendioxid und deren Gemischen ausgewählt wird.

**24.** Verfahren gemäß einem der Ansprüche 18 bis 23, **dadurch gekennzeichnet, dass** das flüssige Dispersionsmilieu der geschmolzenen Phase eine Kohlenwassentofffraktion ist.

**25.** Verfahren gemäß Anspruch 24, **dadurch gekennzeichnet, dass** die Verbindungen der Kohlenwasserstofffraktion aliphatisch sind und eine Anzahl an Kohlenstoffatomen von geringer als 20 aufweisen.

**26.** Verfahren gemäß Anspruch 25, **dadurch gekennzeichnet, dass** die Fraktion der Kohlenwasserstoffe ein unter Atmosphärendruck bei der Polymerisationstemperatur in disperser Phase flüssiges Produkt ist.

**27.** Verfahren gemäß einem der Ansprüche 24 oder 25, dadurch gckennzeichnet, dass die Kohlenwasserstofffraktion ein unter Atmosphärendruck bei einer Temperatur oberhalb 150 °C gasförmiges Produkt ist und dass das Milieu unter Druck in flüssigem Zustand bei der Polymerisationsstufe in disperser Phase gehalten wird.

**28.** Verfahren gemäß Anspruch 18, **dadurch gekennzeichnet, dass** die Stufen der Präpolymerisation in disperser geschmolzener Phase und der Polymerisation in disperser fester Phase in dem gleichen flüssigen Milieu entsprechend einem der Ansprüche 8 bis 13 durchgeführt wird.

**29.** Verfahren gemäß einem der Ansprüche 1 bis 18, **dadurch gekennzeichnet, dass** die Präpolymerisation in geschmolzenener Phase erfolgt.

**30.** Verfahren gemäß Anspruch 29, **dadurch gekennzeichnet, dass** die Stufe c) eine Phase der raschen Verfestigung des geschmolzenen Präpolymeren, eine Phase der Bildung der Teilchen mit einem Durchmesser von geringer als 2 mm und eine Phase der Bereitstellung der Kömer oder Teilchen mit dem Dispersionsmilieu umfasst.

**31.** Verfahren gemäß Anspruch 30, **dadurch gekennzeichnet, dass** die Bildung der Teilchen durch Zerkleinerung erfolgt.

**32.** Verfahren gemäß Anspruch 31, **dadurch gekennzeichnet, dass** die Verfestigung in Form von Ringen mit einem Durchmesser von geringer als 2 mm erfolgt und dass die Bildung der Teilchen durch Schnitt dieser Ringe durchgeführt wird.

**33.** Verfahren gemäß Anspruch 29, **dadurch gekennzeichnet, dass** die Stufe c) eine Phase der Bildung von festen Teilchen des Präpolymeren durch Zerstäubung des Präpolymeren in geschmolzenem Zustand in Form von Tröpfchen mit einem Durchmesser unterhalb 2 mm in ein gasförmiges Fluid von einer Temperatur innerhalb des Temperaturbereichs der Kristallisation des Präpolymeren und eine Phase der Bereitstellung der erhaltenen festen Teilchen mit dem Dispersionsmilieu umfasst.

**34.** Verfahren gemäß Anspruch 29, **dadurch gekennzeichnet, dass** die Stufe c) eine Phase der Bildung der festen Teilchen des Präpolymeren durch Zerstäuben des Präpolymeren in geschmolzenem Zustand in Form von Tröpfchen mit einem Duchmesser unterhalb 2 mm in ein flüssiges Fluid gemäß einem der Ansprüche 8 bis 13 mit einer Temperatur innerhalb des Temperaturbereichs der Kristallisation des Präpolymeren umfasst.

**35.** Verfahren gemäß Anspruch 29, **dadurch gekennzeichnet, dass** die Stufe c) einc Phase der Zerstäubung des Präpolymeren in geschmolzenem Zustand in Form von Tröpfchen mit einem Durchmesser unterhalb 2 mm in eine Flüssigkeit mit einer Temperatur oberhalb der Schmelztemperatur des Präpolymeren und eine Phase der Verfestigung und Kristallisation umfasst.

**36.** Verfahren gemäß Anspruch 35, **dadurch gekennzeichnet, dass** die Flüssigkeit das Dispersionsmilieu der Polymerisationsstufe d) in disperser fester Phase gemäß einem der Ansprüche 8 bis 13 ist.

**37.** Verfahren gemäß Anspruch 35, **dadurch gekennzeichnet, dass** die Flüssigkeit eine bei Atmosphärendruck bei einer Temperatur oberhalb 150°C gasförmige Kohlenwasserstofffraktion, die unter Druck in flüssigem Zustand gehalten wird, ist.

**38.** Verfahren gemäß einem der Ansprüche 27 oder 37, **dadurch gekennzeichnet, dass** die Dispersion durch Verfestigung der Tröpfchen durch Entspannung bei Atmosphärendruck des flüssigen Milieus und anschließende Bereitstellung der erhaltenen festen Teilchen mit dem Dispersionsmilieu erfolgt.

**39.** Verfahren gemäß einem der Ansprüche 18 bis 28 und 36, **dadurch gekennzeichnet, dass** die Stufe c) eine Verfestigungsphase der Suspension des geschmolzenen Präpolymeren durch Abkühlen auf eine Temperatur innerhalb des Temperaturbereichs der Kristallisation des Präpolymeren umfasst.

**40.** Verfahren gemäß Anspruch 39, **dadurch gekennzeichnet, dass** die Abkühlung durch Verdünnen mit kalter Dispersionsflüssigkeit erfolgt.

**Claims**

**1.** Polyester manufacturing process comprising the following steps:

a) esterification or transesterification by a diol of a dicarboxylic acid or of a dicarboxylic acid diester;
b) liquid-phase prepolymerization of the esterification or transesterification product up to an average degree of polymerization of between 10 and 50, preferably between 20 and 45;
c) formation of a prepolymer dispersion in a liquid which is not a solvent for the diol and does not swell the prepolymer, the prepolymer being present in the dispersion in the form of crystallized solid particles having a diameter of less than 2 mm, with a thickness of crystalline lamellae of less than 17 nm;

d) dispersed-solid-phase polymerization; and

e) recovery of the solid particles.

2. Process according to Claim 1, **characterized in that** the dicarboxylic acids are chosen from terephthalic acid, isophthalic acid, naphthalenedioic acid, 5-sulphoisophthalic acid and mixtures thereof.

3. Process according to either of Claims 1 and 2, **characterized in that** the diol is chosen from ethylene glycol. butanediol, neopentyl glycol, diethylene glycol, bisphenols, 1,3-propanediol, 1,2-propanediol, cyclohexanedimethanol and mixtures thereof.

4. Process according to one of Claims 1 to 3, **characterized in that** the prepolymerization step b) is catalysed.

5. Process according to one of Claims 1 to 4, **characterized in that** the polymerization step d) in dispersed solid phase is catalysed.

6. Process according to one of Claims 1 to 5, **characterized in that** the thickness of the crystalline lamellae of the solid particles obtained in step c) is less than 12 nm.

7. Process according to one of Claims 1 to 6, **characterized in that** the diameter of the solid particles obtained in step c) is less than 1 mm.

8. Process according to one of Claims 1 to 7, **characterized in that** the liquid medium for dispersing the solid particles is a hydrocarbon cut.

9. Process according to Claim 8, **characterized in that** the compounds of the hydrocarbon cut are aliphatic and the number of carbon atoms of the said compounds is less than 20.

10. Process according to Claim 9, **characterized in that** the hydrocarbon cut is a liquid product at atmospheric pressure and at the dispersed-phase polymerization temperature.

11. Process according to either of Claims 8 and 9, **characterized in that** the hydrocarbon cut is a gaseous product at atmospheric pressure and at a temperature greater than 150°C and **in that** the medium is maintained under pressure in the liquid state during the dispersed-phase polymerization step.

12. Process according to one of Claims 1 to 11, **characterized in that** the dispersion medium contains a stabilizing compound having surfactant properties.

13. Process according to Claim 12, **characterized in that** the compound having surfactant properties is chosen from protected poly(ethoxylated) alkyl phenols and protected poly(ethoxylated) alkanes.

14. Process according to one of Claims 1 to 13, **characterized in that** the dispersed-solid-phase polymerization is carried out in a stream of inert gas.

15. Process according to Claim 14, **characterized in that** the stream of inert gas is introduced into the liquid dispersion medium by sparging.

16. Process according to either of Claims 14 and 15, **characterized in that** the inert gas is chosen from nitrogen, rare gases, inerted gases, nitrogen-enriched air, carbon dioxide and mixtures thereof.

17. Process according to one of Claims 1 to 16, **characterized in that** the dispersed-solid-phase polymerization is carried out at temperatures below the melting point of the lowest melting particles present in the medium.

18. Process according to one of Claims 1 to 17, **characterized in that** the prepolymerization is carried out in the melt phase dispersed in a liquid medium.

19. Process according to Claim 18, **characterized in that** the dispersion medium for the melt phase contains a stabilizing compound having surfactant properties.

20. Process according to Claim 19, **characterized in that** the surfactant is chosen from protected poly(ethoxylated) alkyl phenols and protected poly(ethoxylated) alkanes.

21. Process according to one of Claims 18 to 20, **characterized in that** the dispersed-solid-phase polymerization is carried out in a stream of inert gas.

22. Process according to Claim 21, **characterized in that** the stream of inert gas is introduced into the liquid dispersion medium by sparging.

23. Process according to either of Claims 21 and 22, **characterized in that** the inert gas is chosen from nitrogen, rare gases, inerted gases, nitrogen-enriched air, carbon dioxide and mixtures thereof.

24. Process according to one of Claims 18 to 23, **characterized in that** the liquid medium for dispersing the melt phase is a hydrocarbon cut.

25. Process according to Claim 24, **characterized in that** the compounds of the hydrocarbon cut are aliphatic and the number of carbon atoms of the said compounds is less than 20.

26. Process according to Claim 25, **characterized in that** the hydrocarbon cut is a liquid product at atmospheric pressure and at the dispersed-phase polymerization temperature.

27. Process according to either of Claims 24 and 25, **characterized in that** the hydrocarbon cut is a gaseous product at atmospheric pressure and at a temperature of above 150°C and **in that** the medium is maintained under pressure in the liquid state during the dispersed-phase polymerization step.

28. Process according to Claim 18, **characterized in that** the dispersed-melt-phase prepolymerization and dispersed-solid-phase polymerization steps are carried out in the same liquid medium according to one of Claims 8 to 13.

29. Process according to one of Claims 1 to 18, **characterized in that** the prepolymerization is carried out in the melt phase.

30. Process according to Claim 29, **characterized in that** step c), comprises a phase of rapid solidification of the molten prepolymer, a phase of forming particles having a diameter of less than 2 mm and a phase of bringing the granules or particles into contact with the dispersion medium.

31. Process according to Claim 30, **characterized in that** the particle forming is carried out by grinding.

32. Process according to Claim 30, **characterized in that** the solidification is carried out in the form of rods having a diameter of less than *2* mm and **in that** the particle forming is carried out by sectioning the said rods.

33. Process according to Claim 29, **characterized in that** step c) comprises a phase of forming solid prepolymer particles by spraying the prepolymer in the molten state in the form of droplets having a diameter of less than 2 mm into a gaseous fluid having a temperature lying within the range of prepolymer crystallization temperatures and a phase of bringing the solid particles obtained into contact with the dispersion medium.

34. Process according to Claim 29, **characterized in that** step c) comprises a phase of forming solid prepolymer particles by spraying the prepolymer in the molten state in the form of droplets having a diameter of less than 2 mm into a liquid fluid according to one of Claims 8 to 13, having a temperature within the range of prepolymer crystallization temperatures.

35. Process according to Claim 29, **characterized in that** step c) comprises a phase of spraying prepolymer in the molten state, in the form of droplets having a diameter of less than 2 mm, into a liquid having a temperature above the melting point of the prepolymer, and a solidification and crystallization phase.

36. Process according to Claim 35, **characterized in that** the liquid is the dispersion medium of the dispersed-solid-phase polymerization step d) according to one of Claims 8 to 13.

37. Process according to Claim 35, **characterized in that** the liquid is a hydrocarbon cut, gaseous at atmospheric pressure and at a temperature above 150°C, maintained under pressure in the liquid state.

38. Process according to either of Claims 27 and 37, **characterized in that** the dispersion is formed by solidifying the droplets by expansion to atmospheric pressure of the liquid medium and then by bringing the solid particles obtained into contact with the dispersion medium.

39. Process according to one of Claims 18 to 28 and 36, **characterized in that** step c) comprises a phase of solidifying the suspension of molten prepolymer by cooling to a temperature lying within the range of prepolymer crystallization temperatures.

40. Process according to Claim 39, **characterized in that** the cooling is carried out by dilution with cold dispersion liquid.